# EUROPÄISCHE PATENTSCHRIFT

(11) **EP 3 562 724 B1**
(45) Veröffentlichungstag und Bekanntmachung des Hinweises auf die Patenterteilung: **11.12.2019**
(21) Anmeldenummer: 18781964.4
(22) Anmeldetag: 06.09.2018
(51) Int. Cl.: B60W 40/06, G01S 7/41, G01S 13/00, G01S 13/88, G01S 13/93

(54) **VERFAHREN ZUR ERMITTLUNG EINER EINEN BEFAHRENEN UNTERGRUND BESCHREIBENDEN UNTERGRUNDKLASSE IN EINEM KRAFTFAHRZEUG UND ENTSPRECHENDES KRAFTFAHRZEUG**
METHOD FOR DETERMINING A GROUND CLASS DESCRIBING A GROUND DRIVEN UPON BY A MOTOR VEHICLE AND CORRESPONDING MOTOR VEHICLE
PROCÉDÉ DE DÉTERMINATION D'UNE CLASSE SOUTERRAINE DÉCRIVANT UN SOUS-SOL OCCUPÉ DANS UN VÉHICULE AUTOMOBILE ET UN VÉHICULE AUTOMOBILE CORRESPONDANT

(30) Priorität: 14.09.2017 DE 102017216338
(43) Veröffentlichungstag der Anmeldung: 06.11.2019
(73) Patentinhaber: Audi AG, 85045 Ingolstadt (DE)
(72) Erfinder: KHLIFI, Rachid, 85748 Garching (DE)
(86) Internationale Anmeldenummer: PCT/EP2018/074042
(87) Internationale Veröffentlichungsnummer: WO 2019/052896

(56) Entgegenhaltungen:
- DE-A1- 4 200 299
- DE-A1-102015 011 928
- US-A1- 2017 166 214

## Beschreibung

Die Erfindung betrifft ein Verfahren zur Ermittlung einer einen befahrenen Untergrund beschreibenden Untergrundklasse in einem Kraftfahrzeug, welches wenigstens einen Radarsensor mit einer eine Winkelmessung in zwei zueinander senkrechten Ebenen erlaubenden Antennenanordnung aufweist. Daneben betrifft die Erfindung ein Kraftfahrzeug.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme. Auch die Nutzung von Radarsensoren im Innenraum des Kraftfahrzeugs wurde bereits vorgeschlagen.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Für moderne Kraftfahrzeuge wurden bereits eine Vielzahl von Fahrzeugsystemen, insbesondere auch Fahrerassistenzsysteme, vorgeschlagen, die eingreifen können, wenn Kraftfahrzeuge bei Glätte oder zügiger Kurvenfahrt in physikalische Grenzbereiche geraten. Zudem wurden in letzter Zeit eine Vielzahl von Fahrzeugsystemen vorgeschlagen, die zur wenigstens teilweiser automatischen Führung von Kraftfahrzeugen ausgebildet sind. Dabei sind heutige derartige Fahrzeugsysteme dafür ausgelegt, dass sich das Kraftfahrzeug auf einer üblichen, asphaltierten Straße befindet, beispielsweise einer Autobahn. Befährt das Kraftfahrzeug einen anderen Fahrbahnbelag, können bei derartigen Fahrzeugsystemen Probleme auftreten, insbesondere dann, wenn beispielsweise Schotter als Untergrund befahren wird. Hierbei ist ein gänzlich anderes Verhalten des Kraftfahrzeugs gegeben.

WO 2010/019045 A1 beschreibt ein System zur automatischen Warnung und/oder zum automatischen Bremsen in einem Fahrzeug. Dort wird vorgeschlagen, Mittel zum Warnen und/oder Durchführen einer Aktion zu aktivieren, wenn ein unterer Schwellwert für die Straßenhaftung erreicht wird. Dabei kann mittels Radar ein Fahrbahnzustand detektiert werden.

US 2017/0166214 A1 befasst sich mit der Identifikation bestimmter Eigenschaften, die zu bestimmten Terrainarten in Bezug stehen, wobei eine Erkennung der Terrainarten in der Nähe eines Kraftfahrzeugs basierend auf diesen identifizierten Eigenschaften stattfinden soll. Es wird vorgeschlagen, Parameter aus Sensordaten zu berechnen, und ein Clustermodell einzusetzen, um die weiten Variationsmöglichkeiten der Werte der Parameter abdecken zu können. Hierzu kann ein Radarsensor verwendet werden, bei dem unterschiedliche Polarisationseigenschaften als Parameter betrachtet werden.

Der Erfindung liegt die Aufgabe zu Grunde, Fahrzeugsystemen eine verbesserte Grundlage zur Parametrierung, insbesondere hinsichtlich des wenigstens teilweise automatischen Betriebs von Kraftfahrzeugen, bereitzustellen. Zur Lösung dieser Aufgabe ist bei einem Verfahren der eingangs genannten Art erfindungsgemäß vorgesehen, dass von dem befahrenen Untergrund stammende Radardaten des Radarsensors auf Grund der Winkelmessung identifiziert werden und hieraus wenigstens eine Reflexionseigenschaft des Untergrunds abgeleitet wird, wobei der Untergrund mittels eines die Reflexionseigenschaft auswertenden Klassifikators einer von wenigstens zwei jeweils wenigstens einen Fahrbahnbelag beschreibenden Untergrundklassen zugeordnet wird. Erfindungsgemäß wird also vorgeschlagen, radarbasiert den Fahrbahnbelag, also konkret das Material und die Struktur des befahrenen Untergrunds selber, nicht dessen Zustand, zu erkennen, woraufhin Aktoren und/oder Fahrzeugsysteme entsprechend parametriert werden können, sodass eine erhöhte Sicherheit gewährleistet wird. Auch wird es ermöglicht, beispielsweise ein Verlassen eines üblichen Straßenuntergrundes zu detektieren und eine erhöhte Gefährdung festzustellen. Dabei kann insbesondere vorgesehen sein, dass als Untergrundklassen wenigstens eine einen glatten befahrenen Untergrund beschreibende Asphaltklasse und eine einen Schotteruntergrund beschreibende Schotterklasse verwendet werden. Denn es hat sich gezeigt, dass mittels Radar eine Aussage über das Befinden des Kraftfahrzeugs auf Asphalt oder auf Schotter getroffen werden kann. Insbesondere auf Schotter als Fahrbahnbelag ändern sich Reibungs- und Haftungseigenschaften des Kraftfahrzeuges stark, nachdem sich bei Schotter beispielsweise Gefahren bei Kurvenfahrten, verlängerte Bremswege und/oder Beschädigungsgefahren bei höherer Geschwindigkeit ergeben. Ausgenutzt wird dabei, dass Schotter und üblicher, glatter Straßenuntergrund, insbesondere Asphalt, deutlich unterschiedliche Reflexionseigenschaften zeigen. Als weitere Untergrundklasse kann sich eine Pistenklasse anbieten, also ein zwar glatter, aber nicht baulich befestigter Untergrund (im Gegensatz zur Asphaltklasse als baulich befestigten Untergrund beschreibend).

Grundsätzlich sind die Radarsensoren dabei zur dreidimensionalen Vermessung des Umfelds ausgebildet, wobei insbesondere auch eine Elevationsmessung neben einer Azimutmessung bezüglich der Winkel durch entsprechende Ausgestaltung der Antennenanordnung des wenigstens einen Radarsensors möglich ist. Auf diese Art und Weise können vom befahrenen Untergrund stammende reflektierte Radarsignale ("BodenReflexionen") als solche identifiziert werden.

Insbesondere auf Halbleitertechnologie basierende Radarsensoren, beispielsweise CMOS-Radarsensoren, wie sie eingangs beschrieben wurden, sind dabei besonders geeignet, auch im Nahbereich hochqualitativ Reflexionseigenschaften jedes Untergrunds, zurückzuliefern, aus denen, wie sich gezeigt hat, nicht allein der Fahrbahnzustand (vereist/nass/...) bestimmt werden kann, sondern auch der Fahrbahnbelag an sich, mithin Materialien und/oder Struktur des befahrenen Untergrunds. Bevorzugt wird daher auch im Rahmen der vorliegenden Erfindung als der wenigstens eine Radarsensor ein einen einen Radartransceiver realisierenden Halbleiterchip aufweisender Radarsensor verwendet. Bevorzugt kann durch den Halbleiterchip auch eine Steuereinheit des Radarsensors und/oder eine digitale Signalverarbeitungskomponente (DSP) des Radarsensors realisiert werden. Zur weiteren Hochintegration und zur weiteren Reduzierung der Signalwege, mithin zur weiteren Erhöhung der Qualität der Radardaten, können der Halbleiterchip und die Antennenanordnung des Radarsensors als ein Package realisiert werden.

Eine glatte Fahrbahn, insbesondere Asphalt, reflektiert stärker in einem kleineren Bereich, was auch als Spoteffekt oder Spiegeleffekt bezeichnet werden kann. Die Streuung der reflektierten Radarstrahlen ist dabei sehr gering. Würde man nun den Fahrbahnzustand, insbesondere die Feststellung, ob Eis oder Wasser vorliegt, beurteilen wollen, gilt, dass die Absorption der Radarstrahlen bei eisbedeckter oder nasser Fahrbahn so stark ist, dass zum einen schwache und zum anderen konzentrierte Reflexionen entstehen. Die Streuung ist sehr gering, sodass diesbezüglich ein ähnliches Verhalten wie bei glatter Fahrbahn vorliegt. Bei Schotter oder vergleichbaren Fahrbahnbelägen tritt eher der gegenteilige Effekt auf. Es treten starke und gestreute Reflexionen der kleineren Steine auf, die alle einzeln zum Radarsensor zurückreflektieren. Die Streuung ist sehr hoch und gleichmäßig verteilt über eine größere Fläche, nachdem die Schottersteine mit ähnlicher Größe über große Flächen gleich verteilt angenommen werden können. Mithin ist eine Differenzierung zwischen Asphalt beziehungsweise einem üblichen, eher glatten Fahrbahnbelag und Schotter sowie vergleichbaren Fahrbahnbelägen insbesondere durch Analyse des Streuverhaltens als Reflexionseigenschaft möglich. Durch das erhöhte Streuverhalten bei Schotter erfährt der Radarsensor ein deutlich erhöhtes Rauschverhalten, was ein weiteres Indiz für das Fahren des Kraftfahrzeugs auf einer Schotter-Fahrbahn ist.

Entsprechend sieht eine vorteilhafte Weiterbildung der vorliegenden Erfindung vor, dass als Reflexionseigenschaft eine die Streuung der Radarwellen beschreibende Streuungseigenschaft bestimmt wird, wobei eine Asphaltklasse bei geringer, insbesondere einen ersten Schwellwert unterschreitender Streuung und eine Schotterklasse bei starker, insbesondere den ersten und/oder einen zweiten, größer als der erste Schwellwert gewählten Schwellwert überschreitenden und/oder einer eine hohe Gleichmäßigkeit aufweisenden Streuung angenommen wird. Auf diese Weise kann die bei Schotter auftretende, deutlich verstärkte Streuung berücksichtigt werden. Bevorzugt zusätzlich wird auch die oben bereits beschriebene Gleichmäßigkeit abgegriffen, wobei beispielsweise ein Gleichmäßigkeitskriterium betrachtet werden kann, in dem überprüft wird, ob ein Maß, das den Grad der Gleichverteilung anzeigt, größer als ein Grenzwert ist.

Besonders bevorzugt ist es ferner, insbesondere zusätzlich zur Betrachtung von Streueigenschaften, wenn als Reflexionseigenschaft ein die Rauschstärke beschreibender Rauschstärkewert ermittelt wird, dass eine Asphaltklasse bei geringer, insbesondere einen dritten Schwellwert unterschreitender Rauschstärke und eine Schotterklasse bei starker, insbesondere den dritten und/oder einen vierten, größer als der dritte Schwellwert gewählten Schwellwert überschreitenden Rauschstärke angenommen wird. Auf diese Weise kann das oben beschriebene verstärkte Rauschen abgegriffen werden.

Dabei sei angemerkt, dass dann, wenn innerhalb des Klassifikators mehrere Kriterien verwendet werden, was wie beschrieben vorteilhaft ist, diese selbstverständlich geeignet gewichtet eingehen können, wobei bevorzugt eine starke Gewichtung auf der Streuung an sich liegt.

Besonders bevorzugt zusätzlich zu einer Asphaltklasse und einer Schotterklasse kann als Untergrundklasse auch eine Pistenklasse verwendet werden. Pisten zeichnen sich dabei durch weite glatte Bereiche aus, die von sporadischen Steinen oder sonstigen irregulären Strukturen durchzogen sind. Während also ein Untergrund der Asphaltklasse eine harmonisch-glatt verlaufende Fläche ohne bzw. nur mit sehr seltenen Diskontinuitäten darstellt, mithin ein Bild mit eindeutigen Reflexionspunkten und hoher Amplitude bietet, treten auf einer Piste sporadisch, aber willkürliche verteilt Diskontinuitäten auf. Es entstehen verteilte Reflexionszentren mit niedriger Amplitude bei weiterhin niedrigem Rauschlevel. Schotter hingegen, wie oben dargestellt, weist gleichmäßig und flächig verteilte Steine auf, so dass das Rauschlevel bei verteilter Streuung steigt.

Konkret kann dabei vorgesehen sein, dass zur Unterscheidung von Untergründen einer Pistenklasse, einer Asphaltklasse und eine Schotterklasse als Reflexionseigenschaft eine Verteilung von abweichend zu einer zumindest im Wesentlichen glatten Fläche reflektierenden Streuzentren verwendet wird, wobei bei einer geringe Dichte der Streuzentren eine Asphaltklasse, bei einer mittleren Dichte der Streuzentren eine Pistenklasse und bei einer hohen Dichte der Streuzentren eine Schotterklasse angenommen wird. Denkbar ist es zusätzlich oder alternativ, dass zur Unterscheidung zwischen der Pistenklasse und der Asphaltklasse als Reflexionseigenschaft eine Reflexionsstärke verwendet wird, wobei bei hoher Reflexionsstärke eine Asphaltklasse, bei niedrigerer Reflexionsstärke eine Pistenklasse angenommen wird. Es versteht sich, dass diese Überprüfungen ebenfalls über Schwellwerte abgegriffen werden können.

Eine besonders zweckmäßige Weiterbildung ergibt sich auch dann, wenn diese Eigenschaften letztlich implizit logisch verknüpft werden, wozu sich die Verwendung künstlicher Intelligenz anbietet. Es kann mithin vorgesehen sein, dass der Klassifikator einen Algorithmus der künstlichen Intelligenz umfasst, welcher mit Trainingsdaten, in denen Reflexionseigenschaften die Untergrundklasse als Grundwahrheit zugeordnet ist, trainiert wurde. Maschinelles Lernen dieser Art, insbesondere auch Deep-Learning-Techniken, eignen sich besonders, um Zusammenhänge in Reflexionsmustern zu erkennen und somit einen hervorragend geeigneten Klassifikator zu bilden, der Reflexionseigenschaften als Eingangsdaten in eine Zuordnung zu einer Untergrundklasse umwandelt.

Dabei sei an dieser Stelle noch angemerkt, dass es im Rahmen der vorliegenden Erfindung selbstverständlich auch denkbar ist, weitere, zusätzliche Untergrundklassen zu verwenden. Auch hierfür können entsprechende, die Differenzierung erlaubende Reflexionseigenschaften ermittelt und herangezogen werden, insbesondere auch in Verfahren des maschinellen Lernens.

Vorzugsweise können zur Ableitung der Reflexionseigenschaft nur Radardaten aus einem innerhalb einer Maximalentfernung liegenden Reflexionsbereich ausgewertet werden, wobei die Maximalentfernung kleiner oder gleich zehn Meter gewählt wird. Dem liegt die Erkenntnis zu Grunde, dass die zur Unterscheidung von Fahrbahnbelägen, insbesondere Asphalt und Schotter, verwendeten Effekte im Nahbereich, mithin im Umfeld des Kraftfahrzeugs bis zehn Meter, stärker zu beobachten sind und somit eine verlässlichere Grundlage zu Bestimmung der Untergrundklasse bieten.

In zweckmäßiger Weiterbildung kann die aktuell bestimmte Untergrundklasse und/oder ein Wechsel der aktuellen Untergrundklasse wenigstens einem weiteren Fahrzeugsystem bereitgestellt werden, insbesondere einem Fahrerassistenzsystem und/oder einem zur wenigstens teilweise automatischen Führung ausgebildeten Fahrzeugsystem und/oder einem Bremssystem und/oder einem Fahrwerkssystem. Ersichtlich können eine Vielzahl von Fahrzeugsystemen die aktuelle Untergrundklasse oder die Tatsache, dass ein Wechsel der Untergrundklasse vorliegt, nutzen, um entsprechende Maßnahmen zu ergreifen und insbesondere ihre Betriebsparameter so zu wählen, dass eine größtmögliche Sicherheit und Robustheit ihrer Funktion gegeben ist. Insbesondere kann also vorgesehen sein, dass bei einem Wechsel der Untergrundklasse eine Umparametrierung des weiteren Fahrzeugsystems auf den neuen Untergrund erfolgt.

Neben dem Verfahren betrifft die Erfindung auch ein Kraftfahrzeug, aufweisend wenigstens einen Radarsensor mit einer eine Winkelmessung in zwei zueinander senkrechten Ebenen erlaubenden Antennenanordnung und ein zur Durchführung des erfindungsgemäßen Verfahrens ausgebildetes Steuergerät. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können. Insbesondere können dabei auch mehrere Radarsensoren vorgesehen sein, was eine gegenseitige Plausibilisierung und/oder statistische Zusammenführung der jeweiligen Radardaten erlaubt, um eine weitere Verbesserung der Klassifizierung des Fahrbahnbelags zu erlauben.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: eine Skizze zum Reflexionsverhalten bei Asphalt,
- Fig. 3: eine Skizze zum Reflexionsverhalten bei Schotter.

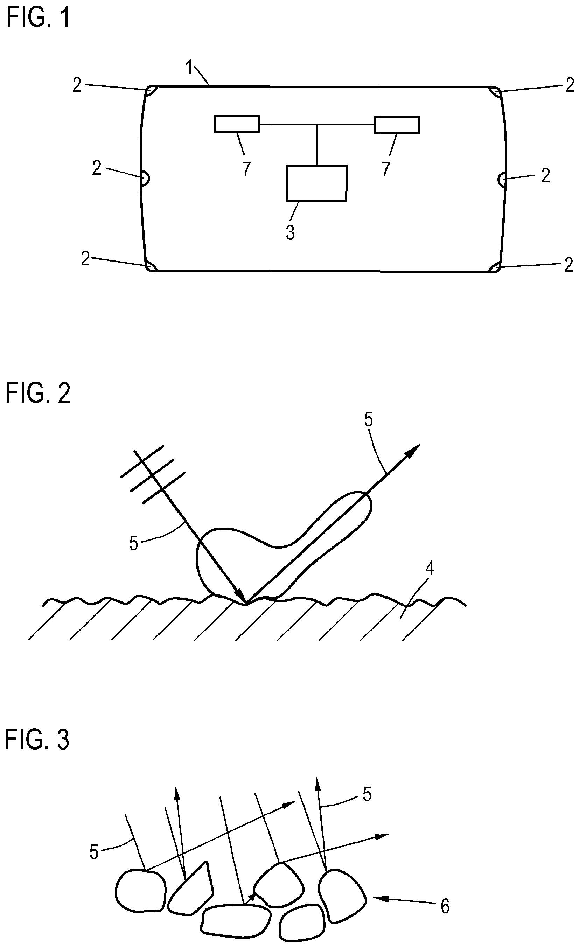

Fig. 1 zeigt eine Prinzipskizze eines erfindungsgemäßen Kraftfahrzeugs 1. Das Kraftfahrzeug 1 weist eine Mehrzahl von Radarsensoren 2 auf, die vorliegend jeweils einen Halbleiterchip aufweisen, konkret ein CMOS-Chip, der als Package mit einer Antennenanordnung des Radarsensors 2 realisiert ist und neben einem Radartransceiver auch eine Steuereinheit und eine digitale Signalverarbeitungskomponente des Radarsensors 2 realisiert. Die Antennenanordnung des Radarsensors 2 erlaubt die Winkelmessung sowohl in Azimut als auch in Elevation. Dies ermöglicht es, vom befahrenen Untergrund stammende Reflexionen, mithin Radardaten, zu identifizieren und einer getrennten Auswertung zuzuführen. Vom Untergrund in einer Entfernung von weniger als zehn Meter stammende Reflexionen beschreibende Radardaten werden in einem Steuergerät 3 des Kraftfahrzeugs 1 einer getrennten Auswertung zugeführt, um eine den befahrenen Untergrund hinsichtlich des Fahrbahnbelags beschreibende Untergrundklasse zu identifizieren. Hierbei werden als Untergrundklassen wenigstens eine Asphaltklasse und eine Schotterklasse, vorzugsweise zusätzlich auch eine Pistenklasse, verwendet.

Die Radardaten werden zunächst zur Bestimmung von Reflexionseigenschaften ausgewertet, wonach die Reflexionseigenschaften als Eingangsdaten einem Klassifikator zugeführt werden, der eine aktuelle Untergrundklasse bestimmt.

Hierbei wird als Reflexionseigenschaft wenigstens eine die Streuung der Radarwellen beschreibende Streuungseigenschaft bestimmt und verwendet, wobei eine Asphaltklasse bei geringer, einen ersten Schwellwert unterschreitender Streuung angenommen wird. Überschreitet die Streuung einen zweiten Schwellwert, der gleich dem ersten Schwellwert sein kann, wird eine Schotterklasse angenommen. Die Streuungseigenschaft stellt dabei ein wesentliches, stark bewertetes Entscheidungskriterium des Klassifikators dar. Ein weiteres Entscheidungskriterium, welches insbesondere geringer gewichtet ist oder zur Plausibilisierung herangezogen wird, überprüft, ob ein die Gleichmäßigkeit der Streuung beschreibendes Maß einen Grenzwert überschreitet, was auf Schotter als Untergrund hindeutet. Schließlich wird als Entscheidungskriterium, insbesondere ebenso geringer gewichtet, eines herangezogen, bei dem als Reflexionseigenschaft ein die Rauschstärke beschreibender Rauschstärkewert ermittelt wird, wobei dann, wenn die Rauschstärke einen dritten Schwellwert überschreitet, eine Asphaltklasse angenommen wird, dann jedoch, wenn die Schotterklasse einen vierten Schwellwert, der gleich dem dritten Schwellwert sein kann, überschreitet, von einer Schotterklasse ausgegangen wird.

Bei weiterer Verwendung einer Pistenklasse kann es ferner zweckmäßig sein, eine eine Verteilung von abweichend zu einer zumindest im Wesentlichen glatten Fläche reflektierenden Streuzentren und/oder eine Reflexionsstärke als Reflexionseigenschaften zu verwenden.

Fig. 2 symbolisiert die koherente Streuung auf einem nur geringe Unebenheiten aufweisenden Asphalt-Untergrund 4, wobei der Streuprozess im Allgemeinen durch Pfeile 5 angedeutet ist. Ein glatter Fahrbahnbelag reflektiert stärker in einem kleinen Bereich, was als Spoteffekt oder Spiegeleffekt bezeichnet werden kann. Die Streuung der reflektierten Radarstrahlen ist ersichtlich sehr gering.

Fig. 3 illustriert dahingegen den bei einem Schotter-Untergrund 6 auftretenden Effekt wiederum anhand von Pfeilen 5. Ersichtlich treten starke und gestreute Reflexionen der Schottersteine auf, die alle einzeln zum Radarsensor 2 zurückreflektieren. Die Streuung ist sehr hoch und gleichmäßig verteilt über größere Flächen. Zudem ist durch das erhöhte Streuverhalten des Schotter-Untergrunds 6 auch ein deutlich erhöhtes Rauschniveau gegeben, was, wie oben erläutert, auch als weiteres Indiz für das Fahren des Kraftfahrzeugs 1 auf einem Schotter-Untergrund 6 verwendet wird.

Pisten liegen gewissermaßen zwischen diesen extremen, nachdem dort sporadische Diskontinuitäten auftreten und eine reduzierte Reflexionsstärke vorliegt.

Die aktuelle Untergrundklasse oder wenigstens ein Wechsel der aktuellen Untergrundklasse wird dabei weiteren Fahrzeugsystemen 7, vergleiche Fig. 1, übermittelt, welche dann gegebenenfalls entsprechende Maßnahmen ergreifen können, beispielsweise eine Umparametrierung, also eine Änderung der Betriebsparameter, zur Erhöhung der Sicherheit des Kraftfahrzeugs 1, indem der Betrieb des jeweiligen Fahrzeugsystems 7 auf den befahrenen Untergrund angepasst werden.

Es sei noch angemerkt, dass es auch denkbar ist, im Klassifikator einen Algorithmus der künstlichen Intelligenz zu verwenden, der mit Techniken des Maschinenlernens auf Basis von gemessenen Trainingsdaten, denen eine entsprechende Untergrundklasse zugeordnet ist, trainiert wurde. Dabei werden insbesondere Techniken des Deep Learning eingesetzt.

## Patentansprüche

1. Verfahren zur Ermittlung einer einen befahrenen Untergrund beschreibenden Untergrundklasse in einem Kraftfahrzeug (1), welches wenigstens einen Radarsensor (2) mit einer eine Winkelmessung in zwei zueinander senkrechten Ebenen erlaubenden Antennenanordnung aufweist,
**dadurch gekennzeichnet,**
**dass** von dem befahrenen Untergrund stammende Radardaten des Radarsensors (2) aufgrund der Winkelmessung identifiziert werden und hieraus wenigstens eine Reflexionseigenschaft des Untergrunds abgeleitet wird, wobei der Untergrund mittels eines die Reflexionseigenschaft auswertenden Klassifikators einer von wenigstens zwei jeweils wenigstens einen Fahrbahnbelag beschreibenden Untergrundklassen zugeordnet wird, wobei als Untergrundklassen wenigstens eine einen glatten befahrenen Untergrund beschreibenden Asphaltklasse und eine einen Schotteruntergrund beschreibende Schotterklasse verwendet werden, wobei als Reflexionseigenschaft eine die Streuung der Radarwellen beschreibende Streuungseigenschaft bestimmt wird, wobei eine Asphaltklasse bei geringer, insbesondere einen ersten Schwellwert unterschreitender Streuung und eine Schotterklasse bei starker, insbesondere den ersten und/oder einen zweiten, größer als der erste Schwellwert gewählten Schwellwert überschreitenden und/oder einer eine hohe Gleichmäßigkeit aufweisenden Streuung angenommen wird.

2. Verfahren nach Anspruch 1,
**dadurch gekennzeichnet,**
**dass** als Reflexionseigenschaft ein die Rauschstärke beschreibender Rauschstärkewert ermittelt wird, wobei eine Asphaltklasse bei geringer, insbesondere einen dritten Schwellwert unterschreitender Rauschstärke und eine Schotterklasse bei starker, insbesondere den dritten und/oder einen vierten, größer als der dritte Schwellwert gewählten Schwellwert überschreitenden Rauschstärke angenommen wird.

3. Verfahren nach Anspruch 1 oder 2,
**dadurch gekennzeichnet,**
**dass** als Untergrundklasse zusätzlich eine Pistenklasse verwendet wird.

4. Verfahren nach einem der vorangehenden Ansprüche,
**dadurch gekennzeichnet,**
**dass** zur Ableitung der Reflexionseigenschaft nur Radardaten aus einem innerhalb einer Maximalentfernung liegenden Reflexionsbereich auswertet werten, wobei die Maximalentfernung kleiner oder gleich 10 m gewählt wird.

5. Verfahren nach einem der vorangehenden Ansprüche,
**dadurch gekennzeichnet,**
**dass** die aktuell bestimmte Untergrundklasse und/oder ein Wechsel der aktuellen Untergrundklasse wenigstens einem weiteren Fahzeugsystem bereitgestellt wird, insbesondere einem Fahrerassistenzsystem und/oder einem zur wenigstens teilweise automatischen Führung ausgebildeten Fahrzeugsystem (7) und/oder einem Bremssystem und/oder einem Fahrwerkssystem.

6. Verfahren nach Anspruch 5,
**dadurch gekennzeichnet,**
**dass** bei einem Wechsel der Untergrundklasse eine Umparametrierung des weiteren Fahrzeugsystems (7) auf den neuen Untergrund erfolgt.

7. Verfahren nach einem der vorangehenden Ansprüche,
**dadurch gekennzeichnet,**
**dass** der Klassifikator einen Algorithmus der künstlichen Intelligenz umfasst, welcher mit Trainingsdaten, in denen Reflexionseigenschaften die Untergrundklasse als Grundwahrheit zugeordnet ist, trainiert wurde.

8. Kraftfahrzeug (1), aufweisend wenigstens einen Radarsensor (2) mit einer eine Winkelmessung in zwei zueinander senkrechenden Ebenen erlaubenden Antennenanordnung und ein zur Durchführung eines Verfahrens nach einem der vorangehenden Ansprüche ausgebildetes Steuergerät (3).

## Claims

1. Method for determining a ground class in a motor vehicle (1) describing a ground driven upon, which motor vehicle has at least one radar sensor (2) with an antenna arrangement permitting an angle measurement in two planes perpendicular to one another,
**characterised in that**
radar data, originating from the ground driven upon, from the radar sensor (2) are identified on the basis of the angle measurement and from this at least one reflective property of the ground is derived, wherein the ground is assigned to one of at least two ground classes describing respectively at least one road surface by means of a classifier evaluating the reflective property, wherein as ground classes are used at least one asphalt class describing a smooth ground driven upon and a gravel class describing a gravel ground, wherein as reflection property is determined a dispersion property describing a dispersion of the radar waves, wherein an asphalt class is assumed in the case of a lower dispersion, in particular undershooting a first threshold value, and a gravel class is assumed in the case of a stronger dispersion, in particular exceeding the first threshold value and/or a second threshold value selected as greater than the first threshold value and/or having a high level of evenness.

2. Method according to claim 1
**characterised in that**
as reflection property is determined a noise intensity value describing a noise intensity, wherein an asphalt class is assumed in the case of a low noise intensity, in particular undershooting a third threshold value, and a gravel class is assumed in the case of a stronger noise intensity, in particular exceeding the third and/or a fourth threshold value selected as greater than the third threshold value.

3. Method according to claim 1 or 2,
**characterised in that**
a piste class is additionally used as ground class.

4. Method according to any of the preceding claims,
**characterised in that**
for deriving the reflection property only radar data from a reflection region situated within a maximum distance are evaluated, wherein the maximum distance is selected as less than or equal to 10 m.

5. Method according to any of the preceding claims,
**characterised in that**
the currently determined ground class and/or a change in the current ground class is provided for at least one further vehicle system, in particular a driver assistance system and/or a vehicle system (7) designed to provide at least partial automatic guidance and or a braking system and/or a chassis system.

6. Method according to claim 5,
**characterised in that**
at a change in the ground class a reparameterisation of the further vehicle system (7) to the new ground takes place.

7. Method according to any of the preceding claims,
**characterised in that**
the classifier comprises an algorithm of artificial intelligence, which was trained with training data in which the ground class as basic truth is assigned to reflection properties.

8. Motor vehicle (1) having at least one radar sensor (2) with an antenna arrangement permitting an angle measurement in two planes perpendicular to one another and a control device (3) designed to carry out a method according to any of the preceding claims.

## Revendications

1. Procédé de détermination d'une classe de sous-sol décrivant un sous-sol parcouru dans un véhicule automobile (1), lequel présente au moins un capteur radar (2) avec un dispositif d'antenne permettant une mesure angulaire dans deux plans perpendiculaires l'un à l'autre,
**caractérisé en ce que**
des données radar provenant du sous-sol parcouru du capteur radar (2) sont identifiées sur la base de la mesure angulaire et au moins une propriété de réflexion du sous-sol en est dérivée, dans lequel le sous-sol est associé à une d'au moins deux classes de sous-sol décrivant respectivement au moins un revêtement de chaussée au moyen d'un classificateur évaluant la propriété de réflexion, dans lequel au moins une classe d'asphalte décrivant un sous-sol parcouru lisse et une classe de gravier décrivant un sous-sol de gravier sont utilisés en tant que classes de sous-sol, dans lequel une propriété de diffusion décrivant la diffusion des ondes radar est déterminée en tant que propriété de réflexion, dans lequel une classe d'asphalte est présumée dans le cas d'une faible diffusion inférieure en particulier à une première valeur seuil et une classe de gravier est présumée dans le cas d'une forte diffusion dépassant en particulier la première et/ou une deuxième valeur seuil sélectionnée supérieure à la première valeur seuil et/ou présentant une grande uniformité.

2. Procédé selon la revendication 1,
**caractérisé en ce que**
une valeur d'intensité de bruit décrivant l'intensité de bruit est déterminée en tant que propriété de réflexion, dans lequel une classe d'asphalte est présumée dans le cas d'une faible intensité de bruit inférieure en particulier à une troisième valeur seuil et une classe de gravier est présumée dans le cas d'une forte intensité de bruit dépassant en particulier la troisième et/ou une quatrième valeur seuil choisie supérieure à la troisième valeur seuil.

3. Procédé selon la revendication 1 ou 2,
**caractérisé en ce que**
une classe de piste est utilisée en outre en tant que classe de sous-sol.

4. Procédé selon l'une quelconque des revendications précédentes,
**caractérisé en ce que**
seules des données radar d'une zone de réflexion située à l'intérieur d'une distance maximum sont évaluées pour la dérivation de la propriété de réflexion, dans lequel la distance maximum est choisie inférieure ou égale à 10 m.

5. Procédé selon l'une quelconque des revendications précédentes,
**caractérisé en ce que**
la classe de sous-sol actuellement déterminée et/ou un changement de la classe de sous-sol actuelle est mis à disposition d'au moins un autre système de véhicule, en particulier un système d'assistance au conducteur et/ou un système de véhicule (7) réalisé pour le guidage au moins partiellement automatique et/ou un système de freinage et/ou un système de châssis.

6. Procédé selon la revendication 5,
**caractérisé en ce que**
lors d'un changement de la classe de sous-sol, un reparamétrage de l'autre système de véhicule (7) a lieu sur le nouveau sous-sol.

7. Procédé selon l'une quelconque des revendications précédentes,
**caractérisé en ce que**
le classificateur comprend un algorithme de l'intelligence artificielle, lequel a été entraîné avec des données d'entraînement, dans lesquelles la classe de sous-sol est associée à des propriétés de réflexion en tant que vérité fondamentale.

8. Véhicule automobile (1), présentant au moins un capteur radar (2) avec un dispositif d'antenne permettant une mesure angulaire dans deux plans perpendiculaires l'un à l'autre et un appareil de commande (3) réalisé pour l'exécution d'un procédé selon l'une quelconque des revendications précédentes.
